# EUROPEAN PATENT APPLICATION

(11) **EP 1 282 259 A1**
(43) Date of publication of application: **05.02.2003**
(21) Application number: 01118447.0
(22) Date of filing: 31.07.2001
(51) Int. Cl.: H04L 7/10, H04L 12/417

(54) **Method of determination of a synchronization symbol transmitting node in a TDMA communication system**

(71) Applicant: MOTOROLA, INC., Schaumburg, IL 60196 (US)
(72) Inventor: Krüger, Andreas, 81667 München (DE); Rausch, Mathias Paul, 85570 Markt Schwaben (DE); Jonas, Mark, 81735 München (DE)
(74) Representative: Gibson, Sarah Jane

(57) **Abstract**

The invention provides a method of starting up a communication on a communication bus having nodes can be described by steps in a node:
A. starting a first timer having a first timeout;
   if signals are on the bus before the first timeout is reached,
   if a correct synchronization symbol is received, sending a message;
   else if not a correct synchronization symbol is received, continuing with step A.;
   else if no signals are on the bus until the first timeout is reached, transmitting a synchronization symbol on the bus; and sending a message.

Further, a synchronization signal recovery mechanism is provided.

## Description

### Field of the Invention

This invention relates to the synchronization of nodes in a TDMA-based communication system, more detailed to a method of determination of the synchronization symbol transmitting node.

### Background of the Invention

In a synchronous TDMA-based communication system a communication bus couples nodes to each other. The nodes communicate according to a communication protocol, wherein the communication evolves in communication cycles starting with a start of cycle (SOC) synchronization symbol, followed by a predefined number of time slots for nodes to transmit messages. Not each time slot has to be assigned to a system, not all nodes need be active at the same time. At the end of a communication cycle an additional time interval can be provided to allow computation of synchronization data. Each node owns a predefined time slot to transmit a frame of physical signals containing a message representing information to transfer. Although each node owns a predefined time slot only one node shall transmit a synchronization symbol. This is different to asynchronous networks (e.g., CAN), where the first node ready to transmit a message starts the communication by this transmission, and dynamic arbitration resolves bus access conflicts during normal operation of a protocol. Advanced fault tolerant systems demand that more than one node are capable to become bus master, i.e. being the node that generates the synchronization symbol. Situations where a bus master has to be defined are when the system starts up and when all active nodes do not receive a synchronization symbol correctly.

An advanced communication protocol is TTP/C that is based on node-specific timeouts. It is restricted in that it requires a static configuration timetable and the sending of a specific type of frames.

Another advanced communication protocol is byteflight that relies on a single master to send out an initial synchronization symbol. The protocol does not have any means to autonomously elect another master. This is a disadvantage, since it places additional overhead on the software running on the host CPU, which can reconfigure the communication controller to send a synchronization symbol.

It is a problem of the invention to overcome the disadvantages of the prior art and to specify a determination of the synchronization symbol transmitting node in a TDMA-based communication system.

### Summary of the Invention

The invention solves the problem with the features of the independent claims. Advantageous improvements and modifications are comprised in the dependent claims.

In a distributed network many nodes initialize themselves in a startup phase as soon as the system is powered up. The nodes complete their initialization typically not simultaneously but one after the other. Some nodes may get ready simultaneously but need not. Not all nodes may be active at all. Not all nodes need to be able to transmit and to generate synchronization symbols - there might be listen-only nodes - but at least two nodes should have transmit capability. The invention provides a startup scheme such that a communication will be established as soon as two nodes are ready for communication. According to the invention, a method of starting up a communication on a communication bus having nodes can be described by steps in a node:
A. starting a first timer having a first timeout;
   if signals are on the bus before the first timeout is reached,
   if a correct synchronization symbol is received, sending a message;
   else if not a correct synchronization symbol is received, continuing with step A.;
   else if no signals are on the bus until the first timeout is reached, transmitting a synchronization symbol on the bus; and sending a message.

The method includes the possibility that signals that are not synchronization symbols are recognized on the bus. This is the case if a node starts listening within a communication cycle after the synchronization symbol. The first timeout is preferably longer than the duration of one communication cycle.

Advantageously, a node has a node priority and the first timeout for a node depends on the node priority. Preferably, different nodes have a different node priority. This allows to give more important nodes a preference and to have the safety that the communication still works if such node fails.

Preferably, the method further comprises the steps of starting a second timer having a second timeout;
if the second timeout is reached,
transmitting a synchronization symbol on the bus;
else if the second timeout is not reached,
continuing with step A.

The second timeout allows starting a communication if only noise signals are seen on the bus for the duration of the second timeout. In this case, a synchronization symbol is transmitted and preferably it is checked if the transmitted synchronization symbol is received correctly. If the transmitted synchronization symbol is received correctly, the transmitting node assumes bus master property, i.e. will generate future synchronization symbols for the whole communication system. In nodes with a receiver unit and a transmitter unit the receiver unit can easily check the symbol on the bus or bus section sent by the transmitter unit of the same node. Further, an acknowledgement procedure can be used to ensure correctness of the synchronization symbol.

Advantageously, the second timeout depends on the node priority.

Preferably, the bus access scheme is at least partly TDMA. The invention is not limited to TDMA access schemes but applicable to systems with communication cycles using a synchronization symbol in each cycle. Preferably the synchronization symbol is at a fixed position within each communication cycle.

Advantageously, a node stops transmitting a synchronization symbol on the bus after a predefined third timeout or after a predefined number of sent synchronization symbols. This feature provides additional safety in case that the transmitting node has a failure.

Above, the startup of a communication in a network has been described and according to the invention, a determination of the synchronization symbol transmitting node in a communication system has been specified.

Now, the same principle of the invention is applied to the recovery of a communication in a network, i.e. in a situation where a communication is already established, i.e. the nodes are receiving periodically synchronization symbols and messages, but a synchronization symbol is not received correctly by a node. According to the invention a method of operating a communication on a communication bus having nodes comprises the steps in a node
C. receiving periodically synchronization symbols and messages; initializing a counter;
D. checking if a synchronization symbol is received correctly on the bus;
if the synchronization symbol is not correctly received, incrementing the counter; and
if the counter has reached a predefined value, transmitting a synchronization symbol on the bus;
if the counter has not reached the predefined value, continuing with step D;
else if the synchronization symbol is correctly received, continuing with step C.

Advantageously, a node has a node priority and the first timeout for a node depends on the node priority. Preferably, different nodes have a different node priority.

Preferably, the step transmitting the synchronization symbol on the bus is performed at the next expected periodical occurrence of a synchronization symbol. Then, an actual communication cycle is not affected and the next communication cycle is equipped with a correct synchronization symbol.

Advantageously, the step D. is performed at the next expected periodical occurrence of a synchronization symbol.

Preferably, the method further comprises the steps of checking if the transmitted synchronization symbol is received correctly; if the transmitted synchronization symbol is received correctly,
assuming bus master property.

Advantageously, the bus access scheme is at least partly TDMA.

According to the invention, a communication controller is adapted to operate according to the method of startup and/or to the method of operating a communication.

In a bus system according to the invention with a plurality of communication participants coupled to a bus, which communication participants are adapted to send messages on the bus sequentially after a synchronization symbol is transmitted on the bus, each communication participant comprises a startup timer initialized by a startup timeout duration dependant on a predefined synchronization symbol transmission priority.

Preferably, after a synchronization symbol communication participant send messages on the bus sequentially, wherein at least two communication participants comprise a synchronization symbol generator.

In this document, bus means any kind of connection between nodes including fishbone-like, ring and star configurations. For example, those skilled in the art know how to implement this invention in a system with distribution nodes, from which distribution nodes extend several lines to a single unit each, or to other distribution nodes. Here also, a bus couples the nodes.

### Brief Description of the Drawings

The invention will now be described, with reference to the accompanying drawings, in which:
Fig. 1 shows a flow diagram of a startup procedure according to a first embodiment the invention;
Fig. 2 shows a flow diagram of a startup procedure according to a second embodiment the invention;
Fig. 3 shows a schematic signal flow scheme of a startup procedure according to the invention;
Fig. 4 shows a flow diagram of a recovery procedure according to a third embodiment the invention; and
Fig. 5 shows a flow diagram of a recovery procedure according to a fourth embodiment the invention.

### Description of Preferred Embodiment

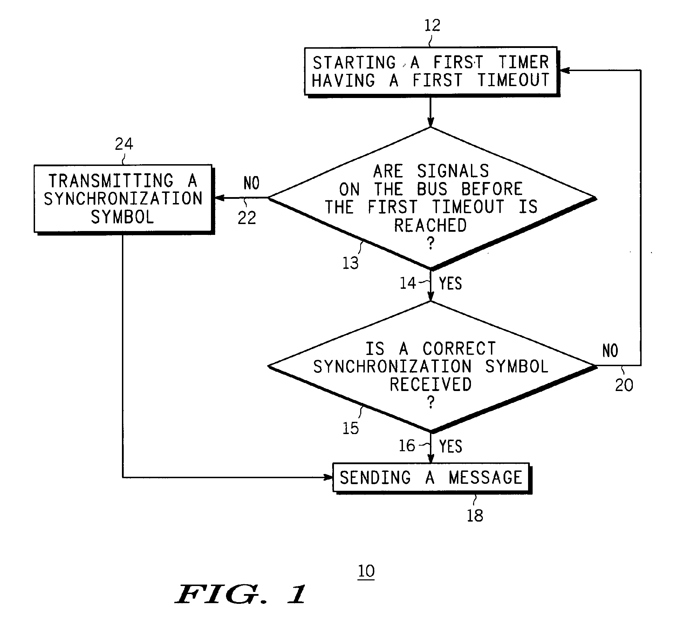

Fig. 1 shows flow diagram 10 of a startup procedure according to a first embodiment the invention. The method in this embodiment of starting up a communication on a communication bus having nodes is described by steps in a node:
A. starting a first timer having a first timeout, step 12;
   checking if signals are on the bus before the first timeout is reached, step 13;
   if signals are on the bus before the first timeout is reached, Y in 14,
   checking if a correct synchronization symbol is received, step 15;
   if a correct synchronization symbol is received, Y in 16, sending a message, step 18;
   else if not a correct synchronization symbol is received, N at 20, continuing with step A., step 12;
   else if no signals are on the bus until the first timeout is reached, N at 22,
   transmitting a synchronization symbol on the bus , step 24; and sending a message, step 18.

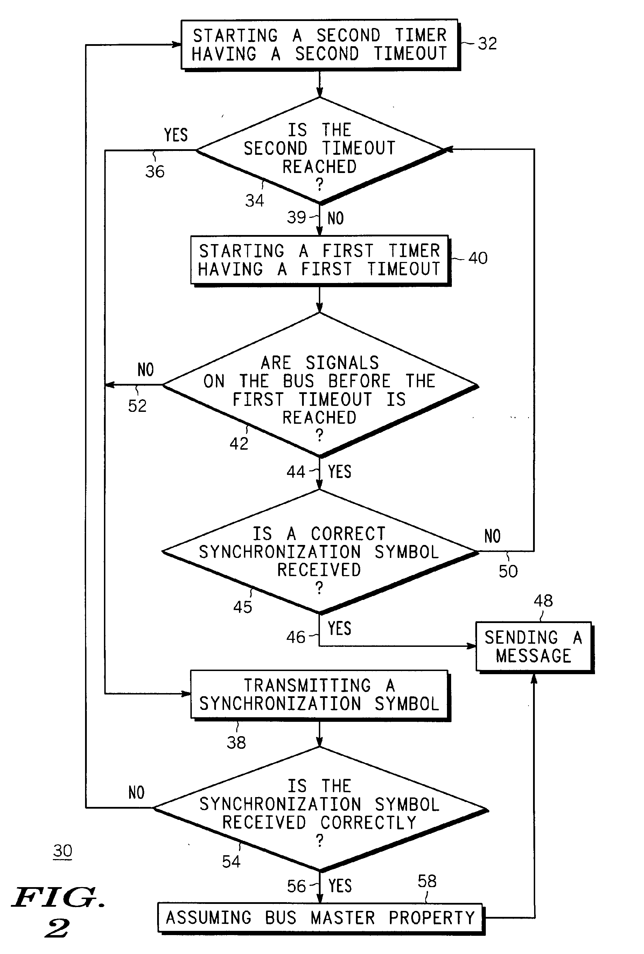

Fig. 2 shows flow diagram 30 of a startup procedure according to a second embodiment the invention. Advantageous steps have been added to those described in Fig. 1. The method in this embodiment of starting up a communication on a communication bus having nodes is described by steps in a node:
starting a second timer having a second timeout, step 32;
checking if the second timeout is reached, step 34
if the second timeout is reached, Y at 36,
   transmitting a synchronization symbol on the bus, step 38;
   checking if the transmitted synchronization symbol is correctly on the bus, step 54;
   if the correct synchronization symbol is received, Y in 56, assuming bus master property, step 58; and
   sending a message, step 48, where the method ends;
   if the second timeout is not reached, N at 39,

A. starting a first timer having a first timeout, step 40;
   checking if signals are on the bus before the first timeout is reached, step 42;
   if signals are on the bus before the first timeout is reached, Y in 44, checking if a correct synchronization symbol is received, step 45;
   if a correct synchronization symbol is received, Y in 46, sending a message, step 48, where the method ends;
   else if not a correct synchronization symbol is received, N at 50, continuing with checking if the second timeout is reached, step 34;
   else if no signals are on the bus until the first timeout is reached, N at 52,
   continuing with transmitting a synchronization symbol on the bus , step 38.

In this invention the step sending a message, here 18, 48, means that the node sends at least one message, but could send more than one messages.

The second timeout allows starting a communication if only noise signals are seen on the bus for the duration of the second timeout. In this case, a synchronization symbol is transmitted and preferably it is checked if the transmitted synchronization symbol is received correctly. If the transmitted synchronization symbol is received correctly, the transmitting node assumes bus master property, i.e. will generate future synchronization symbols for the whole communication system. In nodes with a receiver unit and a transmitter unit the receiver unit can easily check the symbol on the bus sent by the transmitter unit of the same node.

Advantageously, the second timeout depends on the node priority.

Preferably, the bus access scheme is at least partly TDMA. The invention is not limited to TDMA access schemes but applicable to systems with communication cycles using a synchronization symbol in each cycle. Preferably the synchronization symbol is at a fixed position within each communication cycle.

Advantageously, a node stops transmitting a synchronization symbol on the bus after a predefined third timeout or after a predefined number of sent synchronization symbols. This feature provides additional safety in case that a node does not receive synchronization signals correctly and deems itself erroneously to be bus master.

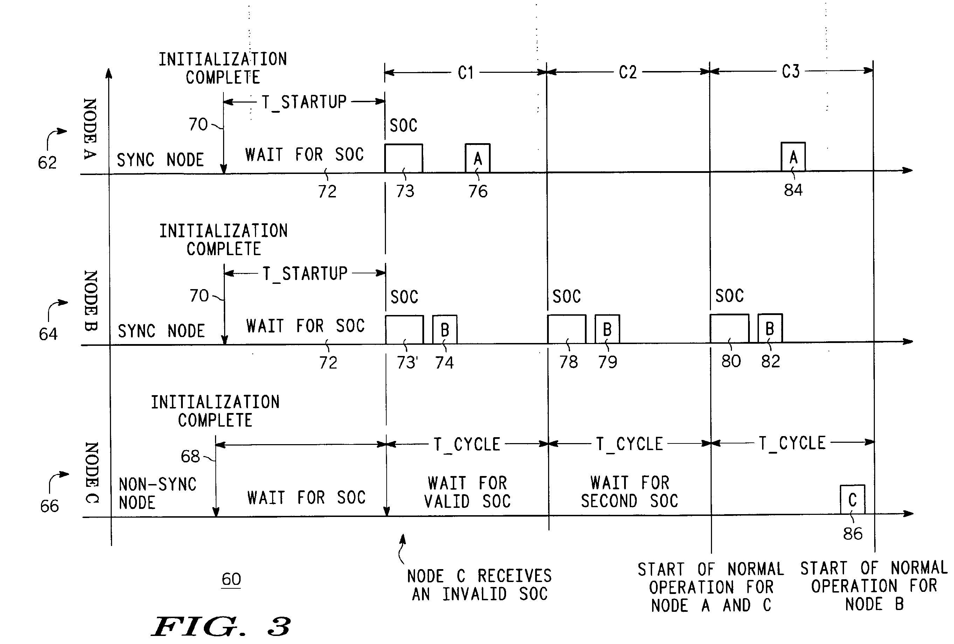

Fig. 3 shows a schematic signal flow scheme 60 of a startup procedure according to the invention. In scheme 60 is shown for three nodes A, B, C, in three rows 62, 64, 66 the signals that each node A, B, C sends over the time, schematically. Nodes A and B are so called synchronization nodes with synchronization capabilities. Such nodes can generate synchronization signals and can assume bus master capability. Node C is a so-called non-synchronization node without synchronization capabilities and thus cannot generate synchronization signals and cannot assume bus master capability. Signal flow scheme 60 is used to explain the startup with three nodes involved, wherein in the beginning an unfavorable exists in that two nodes A and B collide in sending synchronization signals simultaneously. This situation will be shown to be solved referring to the method steps described in Fig. 1 in brackets.

In these examples a start-of-cycle (SOC)-symbol is used for explanation as an example for a synchronization symbol. Nevertheless, those skilled in the art will know that a defined synchronization symbol can be at any defined position within the communication cycle. In principle, it is possible to use even a normal frame and for example use the identifier of the first frame in a cycle as synchronization symbol.

Here, node C is first with completing its initialization at time 68. However, this node has to wait for a valid SOC-symbol. Nodes A and B both complete their initialization simultaneously at time 70. Both start a first timer having a first timeout, T_startup (step 12 of Fig. 1). Nodes A and B check if signals are on the bus before the first timeout is reached (step 13). Because non of A and B sees signals on the bus until the first timeout is reached (N at 22 in Fig. 1), each assumes itself bus master and transmits a synchronization symbol SOC 73, 73' on the bus (step 24), beginning a new communication cycle C1 of duration T_cycle, and sends a message (step 18), namely node B in 74 and node A in 76.

In this communication cycle, node C receives an invalid SOC and thus does not send a message. Here, a node that is not bus master has to wait until it recognizes correct SOCs in two subsequent cycles. In this example the conflict-solving rule is that the synchronization nodes are configured such that the node with the higher priority dominates. Since both nodes A and B see the message of the other node and node B has a higher priority than node A, node B becomes the bus master and starts the next communication cycle C2 with its SOC 78. It also sends a message 79 in cycle C2. Node A is silent in communication cycle C2 because it knows it is not bus master and it has not recognized correct SOCs in two subsequent cycles.

Then, node B begins a new communication cycle C3 with SOC 80 and also sends its message 82. Both nodes A and C have recognized correct SOCs 78 and 80 in two subsequent cycles C2 and C3 and thus transmit their messages 84 and 86, respectively, in cycle C3. Now, the communication is established correctly.

Actually, in cycle C2 node A performs according to the loop of steps 12, 13 14, 15, 20 in Fig. 1 and in cycle C3 node A performs according to the loop of steps 12, 13 14, 16, 18 in Fig. 1.

Above, the startup of a communication in a network has been described and according to the invention, a determination of the synchronization symbol transmitting node in a communication system has been specified.

Now, the same principle of the invention is applied to the recovery of a communication in a network, i.e. in a situation where a communication is already established, i.e. the nodes are receiving periodically synchronization symbols and messages, but a synchronization symbol is not received correctly by a node.

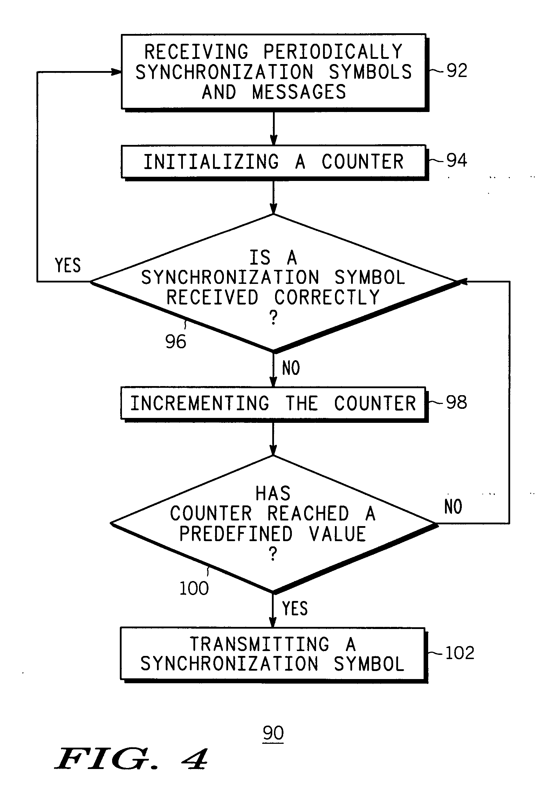

Fig. 4 shows flow diagram of a recovery procedure according to a third embodiment the invention. According to the invention a method of operating a communication on a communication bus having nodes comprises the steps in a node
C. receiving periodically synchronization symbols and messages, step 92; initializing a counter, step 94;
D. checking if a synchronization symbol is received correctly on the bus, step 96;
if the synchronization symbol is not correctly received, N incrementing the counter, step 98; and
checking if the counter has reached a predefined value, step 100,
if the counter has reached a predefined value, Y transmitting a synchronization symbol on the bus, step 102, which ends the method;
if the counter has not reached the predefined value, N continuing with step D in 96;
else if the synchronization symbol is correctly received, Y continuing with step C in 92.

Herein, the step C., receiving periodically synchronization symbols and messages, step 92, can be anywhere in an established communication. The initializing of a counter in step 94 can be implemented as a cycle counter or a counter of time unit considering the communication cycle length.

Advantageously, a node has a node priority and the first timeout for a node depends on the node priority. Preferably, different nodes have a different node priority.

Preferably, the step transmitting the synchronization symbol on the bus is performed at the next expected periodical occurrence of a synchronization symbol. Then, an actual communication cycle is not affected and the next communication cycle is equipped with a correct synchronization symbol.

Advantageously, the step D. is performed at the next expected periodical occurrence of a synchronization symbol.

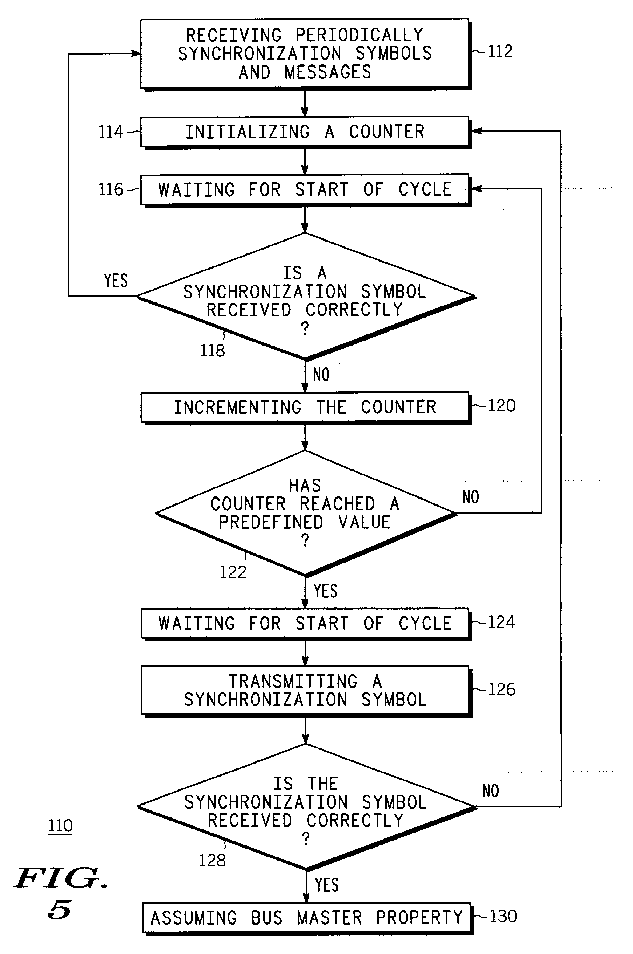

Fig. 5 shows flow diagram 110 of a recovery procedure according to a fourth embodiment the invention. Advantageous steps have been added to those described in Fig. 4. Preferably, the method further comprises the steps of
C. receiving periodically synchronization symbols and messages, step 112;
initializing a counter, step 114;
waiting for SOC, step 116;
checking if a synchronization symbol is received correctly on the bus, step 118;
if the synchronization symbol is not correctly received, N
incrementing the counter, step 120; and
checking if the counter has reached a predefined value, step 122,
if the counter has reached a predefined value, Y waiting for SOC, step 124;
transmitting a synchronization symbol on the bus, step 126;
checking if the transmitted synchronization symbol is received correctly, step 128;
if the transmitted synchronization symbol is received correctly, Y
assuming bus master property, step 130, which ends the method;
if the transmitted synchronization symbol is not received correctly, N
continuing with step initializing the counter in 114;
if the counter has not reached the predefined value, N continuing with step waiting for SOC, in 124;
if a synchronization symbol is correctly received, Y after 118 continuing with step C in 112.

The typical conditions are that a node is in the loop consisting of steps 112, 114, 116, 118 with a synchronization symbol being correctly received or the node is bus master.

Advantageously, the bus access scheme is at least partly TDMA.

According to the invention, a communication controller is adapted to operate according to the method of startup and/or to the method of operating a communication.

In a bus system according to the invention with a plurality of communication participants coupled to a bus, which communication participants are adapted to send messages on the bus sequentially after a synchronization symbol is transmitted on the bus, each communication participant comprises a startup timer initialized by a startup timeout duration dependant on a predefined synchronization symbol transmission priority.

Preferably, after a synchronization symbol communication participant send messages on the bus sequentially, wherein at least two communication participants comprise a synchronization symbol generator.

The invention provides a distributed algorithm that brings a complete network from the power-down state to full operation. All nodes are brought into a synchronized state, from a state where none of the nodes knows of the timing of any of the other nodes. The startup algorithm according to the invention fulfills the requirements: Not all nodes are powered up at the same time; therefore collisions may occur and must be handled. The startup algorithm ends, i.e. it does not go on indefinitely but after some cycles the bus master node is defined. Further, the startup time is completed within a short time bound if no faults occur during the startup phase. The startup algorithm is simple and easy to implement.

The invention further provides a distributed algorithm that brings a complete network from a state of a synchronization error to full operation. A failure of the node sending the Sync symbol is automatically detected and can be overcome.

The proposed algorithms fulfill these requirements and are useful for an efficient implementation of a synchronous, TDMA-based communication protocol. Furthermore, there is no need for a complicated configuration timetable and the sending of dedicated frames.

## Claims

1. A method of starting up a communication on a communication bus having nodes comprising the steps in a node
A. starting a first timer having a first timeout (12);
if signals are on the bus before the first timeout is reached (Y, 14),
if a correct synchronization symbol is received (Y, 16), sending a message (18);
else if not a correct synchronization symbol is received (N, 20), continuing with step A. (12);
else if no signals are on the bus until the first timeout is reached (22), transmitting a synchronization symbol on the bus (24); and sending a message (18).

2. The method of claim 1, wherein each node has a node priority and the first timeout depends on the node priority.

3. The method of claim 2 wherein different nodes have a different node priority.

4. The method of claim 1, further comprising the steps of
starting a second timer having a second timeout (32);
if the second timeout is reached (Y, 36),
transmitting a synchronization symbol on the bus (38);
else if the second timeout is not reached (N, 39),
continuing with step A (40).

5. The method of claim 4, further comprising the steps of checking if the transmitted synchronization symbol is received correctly (54); if the transmitted synchronization symbol is received correctly (Y in 56),
assuming bus master property (58).

6. The method of claim 4, wherein the second timeout depends on the node priority.

7. The method of claim 1, wherein the bus access scheme is at least partly TDMA.

8. The method of claim 1, wherein the node stops transmitting a synchronization symbol on the bus after a predefined third timeout or after a predefined number of sent synchronization symbols.

9. A method of operating a communication on a communication bus having nodes comprising the steps in a node
C. receiving periodically synchronization symbols and messages (92); initializing a counter (94);
D. checking if a synchronization symbol is received correctly on the bus (96);
if the synchronization symbol is not correctly received (N), incrementing the counter (98); and
if the counter has reached a predefined value (Y, 100), transmitting a synchronization symbol on the bus (102);
if the counter has not reached the predefined value (N), continuing with step D (96);
else if the synchronization symbol is correctly received (Y),
continuing with step C (92).

10. The method of claim 9, wherein each node has a priority and the predefined value depends on the node priority.

11. The method of claim 10, wherein each node has a different node priority.

12. The method of claim 9, wherein the step transmitting the synchronization symbol on the bus is performed at the next expected periodical occurrence of a synchronization symbol.

13. The method of claim 9, wherein the step D. is performed at the next expected periodical occurrence of a synchronization symbol.

14. The method of claim 9, further comprising the steps of checking if the transmitted synchronization symbol is received correctly (128); if the transmitted synchronization symbol is received correctly (Y),
assuming bus master property (130).

15. The method of claim 9, wherein the bus access scheme is at least partly TDMA.

16. A communication controller adapted to operate according to the method of claim 1.

17. A communication controller adapted to operate according to the method of claim 9.

18. A bus system with a plurality of communication participants coupled to a bus, which communication participants are adapted to send messages on the bus sequentially after a synchronization symbol is transmitted on the bus, **characterized in that**
each communication participant comprises a startup timer initialized by a startup timeout duration dependant on a predefined synchronization symbol transmission priority.

19. The bus system of claim 18, wherein each communication participants after a synchronization symbol send messages on the bus sequentially, **characterized in that**
at least two communication participants comprise a synchronization symbol generator.
